(19) Europäisches Patentamt
European Patent Office
Office européen des brevets

(11) EP 4 484 463 A1

(12) EUROPEAN PATENT APPLICATION

(43) Date of publication:
**01.01.2025 Bulletin 2025/01**

(21) Application number: **23182113.3**

(22) Date of filing: **28.06.2023**

(51) International Patent Classification (IPC):
***C08G 61/08*** *(2006.01)* ***B01J 31/02*** *(2006.01)*
***B32B 27/08*** *(2006.01)* ***C08L 65/00*** *(2006.01)*
***C09D 165/00*** *(2006.01)*

(52) Cooperative Patent Classification (CPC):
**C08G 61/08; B01J 31/02; C08L 65/00; C09D 165/00;** C08G 2261/135; C08G 2261/3322; C08G 2261/3324; C08G 2261/3325; C08G 2261/418; C08G 2261/76

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
- **Telene SAS**
  **59910 Bondues (FR)**
- **Rimtec Corporation**
  **Tokyo 100-0005 (JP)**

(72) Inventors:
- **DROZDZAK-MATUSIAK, Renata Anna**
  **59290 Wasquehal (FR)**
- **DAEMEN, Alexander Pieter Maria**
  **3090 Overijse (BE)**
- **NISHIOKA, Naoki**
  **59700 Marcq en Baroeul (FR)**

(74) Representative: **Arnold & Siedsma**
**Bezuidenhoutseweg 57**
**2594 AC The Hague (NL)**

# (54) POLYMERIZABLE COMPOSITION OF CYCLIC OLEFINIC MONOMERS AND ASSOCIATED RING-OPENING METATHESIS POLYMERIZATION PROCESS

(57) There is provided a polymerizable composition comprising:
• monomers, said monomers comprising cyclic olefinic monomers having a ring strain of greater than 85 kJ/mol, preferably greater than 100 kJ/mol;
• one or more 18-electron Schrock alkylidene adducts chosen from complexes of 14-electron Schrock alkylidene compounds and bidentate ligands, and
• less than 10 wt.% of an inert solvent, based on the weight of the polymerizable composition, preferably less than 5 wt.%.

Also provided is a ring-opening metathesis polymerization process and a polymerized article obtainable by said process.

EP 4 484 463 A1

## Description

### FIELD OF THE INVENTION

The present invention relates to a polymerizable composition comprising monomers, said monomers comprising cyclic olefinic monomers. The invention also relates to a ring-opening metathesis polymerization (ROMP) process that makes use of the polymerizable composition. The invention finally concerns novel polymerized articles obtainable by the ROMP process.

### BACKGROUND OF THE INVENTION

Preparation of polymers and copolymers by ring opening metathesis polymerization (ROMP) of cyclic olefinic monomers is well known in the art. A good example is the production of polydicyclopentadiene polymer (PDCPD) by using dicyclopentadiene monomers and a metathesis catalyst system. Examples of other monomers that may be used to copolymerize with DCPD include monocyclic olefins which contain 3 or more carbon atoms and one or more double bonds. Typical examples include cyclooctadiene (COD), tricyclopentadiene (TCPD) and ethylidene norbornene (ENB) monomers.

ROMP of cyclic olefinic monomers may be catalysed by organometallic complexes having a transition metal atom as centre atom. Transition metals such as tantalum, molybdenum, tungsten, ruthenium, and osmium may be mentioned. Molybdenum (Mo) and tungsten (W) alkylidene complexes - referred to as Schrock catalysts - are among the most promising catalysts for olefin metathesis reactions, such as the group of Mo(VI) and W(VI) alkylidene complexes.

Although such catalysts may be effective in catalysing ROMP of cyclic olefinic monomers, they are known in the art to frequently lack stability in air which makes them more difficult to handle and often restricts their usefulness, in particular in processes that cannot be carried out under inert circumstances.

WO2012/116695A1, which is incorporated in the present application in its entirety, has proposed a solution to overcome the lack of air stability by complexing such catalysts with bidentate heterocycles such as 1,10-phenanthroline and 2,2'-bipryridine. In such process, 18-electron molybdenum or tungsten alkylidene complexes for instance are formed by a 14-electron molybdenum or tungsten alkylidene complex (herein referred to as a 'parent complex') and a 1,10-phenanthroline or a 2,2'-bipyridine as a neutral bidentate ligand. Unfortunately, it turned out that such air stable catalysts were not active catalytically, and they had to be chemically activated by exposure to a Lewis acid such as $MgCl_2$, $MgBr_2$, $MgI_2$, $MnCl_2$, $MnBr_2$, $MnI_2$, $FeCl_3$, $AlCl_3$, $CuCl_2$, $ZnCl_2$, $ZnBr_2$, $ZnI_2$, $Zn(triflate)_2$ or $Zn(trifluoroacetate)_2$ for instance. Having to add such Lewis acid is cumbersome in many production processes, for instance because of producing undesirable by-products, and should preferably be avoided.

WO2021/239891A1 discloses Schrock-alkylidene complexes comprising a phenanthrene ligand. The inventors of WO2021/239891A1 discovered that such Schrock-alkylidene complexes having a finite stability constant in the range of from 5 $L \cdot mol^{-1}$ to 250,000 $L \cdot mol^{-1}$ when measured at 25°C and when the complex is dissolved in a solvent, may be air-stable and catalytically active in an olefinic metathesis reaction without the necessity of removing the bidentate ligand by means of a Lewis acid, and hence unnecessarily forming the corresponding by-products. Such complexes appear to be autoactivating when dissolved.

However, it appears difficult to control ROMP kinetics with these catalysts, in particular for polymerizing compositions that at least comprise cyclic olefinic monomers having a ring strain of greater than 85 kJ/mol.

Therefore, it is an object of the present invention to provide a polymerizable composition of monomers, said monomers comprising cyclic olefinic monomers having high ring strain, which allows simplified handling in processing without a chemical activation and without the risk of a premature and uncontrollable ROMP reaction. Other objects of the present invention provide a safe moulding operation, and a practical manufacturing method that can be scaled up easily. A further object provides a ring-opening metathesis polymerization (ROMP) process that makes use of the polymerizable composition, as well as novel polymerized articles obtainable using the invented ROMP process.

### SUMMARY OF THE INVENTION

This and other objects are achieved by a polymerizable composition in accordance with claim 1. The polymerizable composition comprises:

- monomers, said monomers comprising cyclic olefinic monomers having a ring strain of greater than 85 kJ/mol, preferably greater than 100 kJ/mol;
- one or more 18-electron Schrock alkylidene adducts chosen from complexes of 14-electron Schrock alkylidene compounds and bidentate ligands according to formula (I):

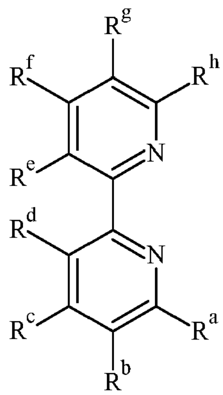

(I)

wherein $R^a$, $R^b$, $R^c$, $R^d$, $R^e$, $R^f$, $R^g$ and $R^h$ are independently selected from the group consisting of H, halogen, nitro, cyano, trifluoromethyl, $C_1$-$C_{12}$-alkoxycarbonyl, $C_1$-$C_{12}$-alkyl, 5- to 18-membered aryl, $C_1$-$C_{12}$-alkyloxy and di-($C_1$-$C_4$-alkyl)amino, or residues $R^d$ and $R^e$ are connected to one another while forming a 6-membered ring wherein $R^d$ and $R^e$ together form a group $C(R^i)=C(R^j)$ wherein $R^i$ and $R^j$ are independently selected from the group consisting of H, halogen, nitro, cyano, trifluoromethyl, $C_1$-$C_{12}$-alkoxycarbonyl, $C_1$-$C_{12}$-alkyl, 5- to 18-membered aryl, $C_1$-$C_{12}$-alkyloxy and di-($C_1$-$C_4$-alkyl)amino,
wherein the one or more 18-electron Schrock alkylidene adducts preferably have a stability constant K greater than 250,000 $L \cdot mol^{-1}$ at 25°C in deuterated benzene ($C_6D_6$) as determined in accordance with the protocol defined in the experimental section, preferably greater than 500,000 $L \cdot mol^{-1}$; and

- less than 10 wt.% of an inert solvent and/or carrier, based on the weight of the polymerizable composition, preferably less than 5 wt.%.

According to the invention, the catalyst system comprises the one or more 18-electron Schrock alkylidene adducts, as claimed. The inventors discovered that the 18-electron Schrock alkylidene adducts as claimed remain non-dissociative at least up to room temperature for a certain time in a composition comprising the 18-electron Schrock alkylidene compounds and cyclic olefinic monomers having a ring strain of greater than 85 kJ/mol. This allows for a homogeneous mixing of the 18-electron Schrock alkylidene adduct in the composition without any premature ROMP reaction. Such premature ROMP reaction may lead to encapsulation of the catalyst and an incomplete polymerization. Surprisingly however, the same 18-electron Schrock alkylidene adducts as claimed appear to eventually autocatalyze at room temperature even if the composition does not contain an inert solvent. The inventors have found that this only occurs when the composition comprises monomers, said monomers comprising cyclic olefinic monomers having a ring strain of greater than 85 kJ/mol, preferably greater than 100 kJ/mol, as claimed.

It thus appears that the compositions as claimed are easily prepared at room temperature and may be polymerized without any chemical activation in a controlled manner. This is of high relevance when reactions are carried out at an industrial scale, since such reactions must be controllable. Further, there appears to be no need to actively heat the composition to temperatures above room temperature, although this is obviously not excluded.

The above finding is the more surprising since adding the parent 14-electron Schrock alkylidene compound directly to the composition leads to an uncontrolled ROMP, due to the apparently high activity of the parent 14-electron Schrock alkylidene compound in compositions at least comprising cyclic olefinic monomers having a ring strain of greater than 85 kJ/mol.

In another aspect of the invention, a ring-opening metathesis polymerization (ROMP) process is provided comprising the steps of:

(a) providing a polymerizable composition as claimed;
(b) subjecting the polymerizable composition to ring-opening metathesis polymerization.

In yet another aspect of the invention, novel polymerized articles are provided comprising between 5 and 100 ppm of the combined amounts of the metals Mo and W, based on the weight of the polymerized article, obtainable by the ring-opening metathesis polymerization process as claimed.

## DETAILED DESCRIPTION OF EMBODIMENTS OF THE INVENTION

The invention provides a polymerizable composition comprising:

- monomers, said monomers comprising cyclic olefinic monomers having a ring strain of greater than 85 kJ/mol, preferably greater than 100 kJ/mol;
- one or more 18-electron Schrock alkylidene adducts chosen from complexes of 14-electron Schrock alkylidene compounds and bidentate ligands according to formula (I):

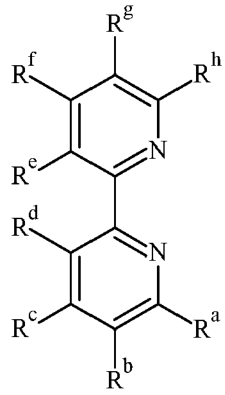

(I)

wherein $R^a$, $R^b$, $R^c$, $R^d$, $R^e$, $R^f$, $R^g$ and $R^h$ are independently selected from the group consisting of H, halogen, nitro, cyano, trifluoromethyl, $C_1$-$C_{12}$-alkoxycarbonyl, $C_1$-$C_{12}$-alkyl, 5- to 18-membered aryl, $C_1$-$C_{12}$-alkyloxy and di-($C_1$-$C_4$-alkyl)amino, or residues $R^d$ and $R^e$ are connected to one another while forming a 6-membered ring wherein $R^d$ and $R^e$ together form a group $C(R^i)=C(R^j)$ wherein $R^i$ and $R^j$ are independently selected from the group consisting of H, halogen, nitro, cyano, trifluoromethyl, $C_1$-$C_{12}$-alkoxycarbonyl, $C_1$-$C_{12}$-alkyl, 5- to 18-membered aryl, $C_1$-$C_{12}$-alkyloxy and di-($C_1$-$C_4$-alkyl)amino,
wherein the one or more 18-electron Schrock alkylidene adducts have a stability constant K greater than 250,000 $L\cdot mol^{-1}$ at 25°C in deuterated benzene ($C_6D_6$) as determined in accordance with the protocol defined in the experimental section, preferably greater than 300,000 $L\cdot mol^{-1}$, more preferably greater than 400,000 $L\cdot mol^{-1}$, even more preferably greater than 500,000 $L\cdot mol^{-1}$; and

- less than 10 wt.% of an inert solvent and/or carrier, based on the weight of the polymerizable composition, preferably less than 5 wt.%.

The term '*inert solvent*' as used herein concerns a solvent that is not reactive under ROMP polymerization conditions.

The inventive composition *inter alia* comprises the 18-electron Schrock alkylidene adducts having a relatively high stability and monomers that should at least partly comprise cyclic olefinic monomers, preferably having at least two carbon-carbon double bonds, having a ring strain of greater than 85 kJ/mol. The relatively high stability of the 18-electron Schrock alkylidene adducts combined with the high ring strain of the cyclic olefinic monomers, preferably having at least two carbon-carbon double bonds, are instrumental in achieving the above-described objects of the invention.

In a preferred embodiment, a polymerizable composition is provided wherein the one or more 18-electron Schrock alkylidene adducts are chosen from the group represented by formula (II):

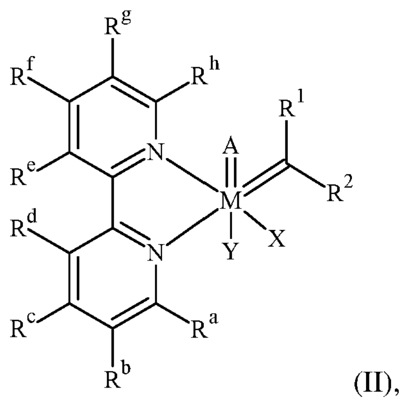

(II),

wherein:

M is Mo or W,
A is O or N-$R^3$,
$R^1$ and $R^2$ are independently selected from the group consisting of H, $C_1$-$C_{12}$-alkyl and 5-to 18-membered aryl, which $C_1$-$C_{12}$-alkyl and 5-to 18-membered aryl in turn may be substituted with one or more of $C_1$-$C_{12}$-alkyl, 5- to 18-membered aryl, $C_1$-$C_{12}$-alkyloxy, di-($C_1$-$C_4$-alkyl)amino, halogen, trifluoromethyl, cyano and nitro residues, with the proviso that only one of $R^1$ and $R^2$ can be hydrogen at the same time,
$R^3$ is selected from the group consisting of $C_1$-$C_{12}$-alkyl and 5- to 18-membered aryl, which in turn may be substituted with one or more of $C_1$-$C_{12}$-alkyl, 5- to 18-membered aryl, $C_1$-$C_{12}$-alkoxy, di-($C_1$-$C_4$-alkyl)amino, halogen, trifluoromethyl, cyano and nitro residues,
X and Y are independently selected from the group consisting of halogen, methanesulfonyloxy, trifluoromethanesulfonyloxy, benzenesulfonyloxy, toluenesulfonyloxy, pyrrolyl, indolyl, pyrazolyl, $C_1$-$C_{12}$-alkyloxy, 5- to 18-membered aryloxy, tri($C_1$-$C_{12}$-alkyl)silyloxy, tri($C_6$-$C_{18}$-aryl)silyloxy, di($C_1$-$C_{12}$-alkyl)($C_6$-$C_{18}$-aryl)silyloxy, ($C_1$-$C_{12}$-alkyl) di($C_6$-$C_{18}$-aryl)silyloxy and tri($C_1$-$C_{12}$-alkyloxy)silyloxy, which in turn may be substituted with one or more of $C_1$-$C_{12}$-alkyl, 5-to 18-membered aryl, $C_1$-$C_{12}$-alkyloxy, di-($C_1$-$C_4$-alkyl)amino, halogen, trifluoromethyl, cyano and nitro residues, or wherein groups X and Y together form the structure of formula (III-A), (III-B) or (III-C):

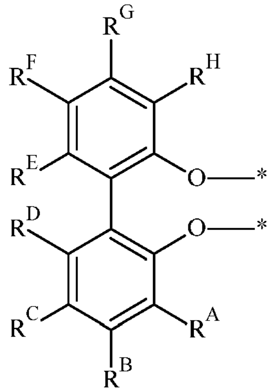

(III-A)

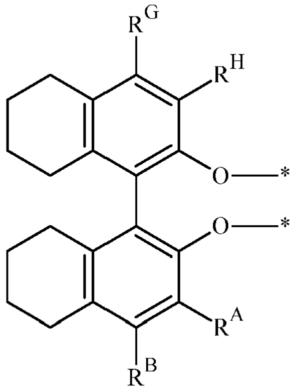

(III-B)

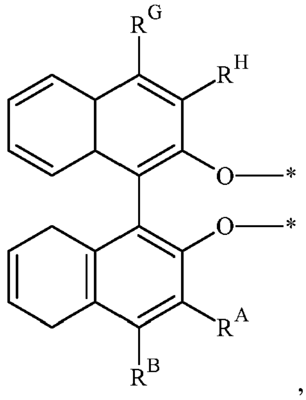

(III-C)

,

wherein $R^A$, $R^B$, $R^C$, $R^D$, $R^E$, $R^F$, $R^G$ and $R^H$ are independently selected from the group consisting of H, halogen, nitro, cyano, trifluoromethyl, $C_1$-$C_{12}$-alkoxycarbonyl, $C_1$-$C_{12}$-alkyl, 5- to 18-membered aryl, $C_1$-$C_{12}$-alkyloxy and di-($C_1$-$C_4$-alkyl)amino.

Within the context of the present application, the below terms have the following meaning:

- "$C_1$-$C_{12}$-alkyl" represents a non-branched, branched or cyclic alkyl residue having from 1 to 12 carbon atoms;
- "5- to 18-membered aryl" represents a monocyclic, bicyclic or tricyclic carbocyclic or heterocyclic aromatic residue which in turn may bear from 0 to 5 substituents selected from the list: $C_1$-$C_{12}$-alkyl, $C_1$-$C_{12}$-alkoxy, di($C_1$-$C_4$-alkyl) amino, halogen, cyano, and nitro;
- "di-($C_1$-$C_4$-alkyl)amino" represents an amino group having two non-branched, branched or cyclic alkyl substituents which have from 1 to 4 carbon atoms, respectively, and which may be the same or which may be different;
- "halogen" encompasses fluorine, chlorine, bromine and iodine.

Preferred alkyl residues in the scope of this invention are non-branched, branched or cyclic alkyl residues having from 1 to 12 carbon atoms, such as, but not limited to methyl, trifluoromethyl, ethyl, *n*-propyl, isopropyl, hexafluoroisopropyl, *n*-butyl, iso-butyl, *sec*-butyl, *tert*-butyl, trifluoro-*tert*-butyl, hexafluoro-*tert*-butyl, nonafluoro-*tert*-butyl, 1-ethylpropyl, *n*-pentyl, *n*-hexyl, cyclopropyl, cyclobutyl, cyclopentyl, cyclohexyl, cycloheptyl and adamantyl.

Preferred aryl residues in the scope of this invention may be selected from phenyl, naphthyl, anthryl, methylphenyl, dimethylphenyl, trimethylphenyl, ethylphenyl, diethylphenyl, isopropylphenyl, di(isopropyl)phenyl, tri(isopropyl) phenyl, *tert*-butylphenyl, di(*tert*-butyl)phenyl, methoxyphenyl, dimethoxyphenyl, trimethoxyphenyl, trifluoromethylphenyl, bis(trifluoromethyl)phenyl, fluorophenyl, difluorophenyl, chlorophenyl, dichlorophenyl, bromophenyl, iodophenyl, pentafluorophenyl, dimethylaminophenyl, phenylphenyl, diphenylphenyl, (methoxycarbonyl)phenyl), (ethoxycarbonyl)phenyl and (*tert*-butoxycarbonyl)phenyl. Also heterocyclic aryl residues having up to two heteroatoms selected from N, O and/or S such as furyl, thienyl, thiazolyl, oxazolyl, indolyl, isothiazolyl, isoxazolyl, pyrazolyl, imidazolyl, pyridyl, primidinyl, pyridazinyl, pyrazinyl, benzofuranyl, benzothiophenyl, benzimidazolyl and carbazolyl, are within the scope of the invention.

Preferred di-($C_1$-$C_4$-alkyl)amino residues in the scope of this invention may be selected from N,N-dimethylamino, N,N-diethylamino, N-ethyl-N-methylamino, N-methyl-N-*n*-propylamino, N-isopropyl-N-n-propylamino, N,N-diisopropylamino, N-*n*-butyl-N-methylamino and N-tert-butyl-N-methylamino.

Another preferred embodiment according to the invention provides a polymerizable composition as defined herein, wherein the one or more 18-electron Schrock alkylidene adducts are chosen from formula (II-A) and (II-B):

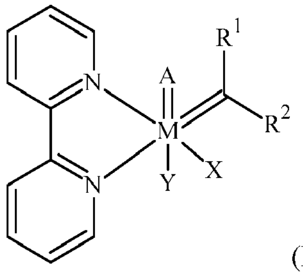
(II-A)

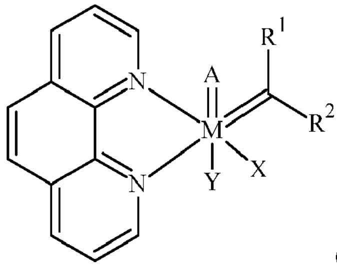
(II-B),

wherein M, A, X, Y, $R^1$ and $R^2$ are as defined as above.

In formula (II-A), examples of preferred 2,2'-bipyridines (2,2'-dipyridyles) which may be used within the scope of the present invention as ligands for stabilizing 14-electron Schrock-alkylidene complexes of molybdenum or tungsten comprise 2,2'-bipyridine, 5,5'-dimethyl-2,2'-dipyridyl, 4,4'-dimethyl-2,2'-dipyridyl, 6,6'-dimethyl-2,2'-dipyridyl, 4-4'-dimethoxy-2-2'-bipyridine, 2,2'-biquinoline, 4,4'-di-tert-butyl-2,2'-dipyridyl, 2,2'-bipyridinyl-4,4'-dicarboxylic acid dimethylester, 4,4'-diphenyl-2,2'-dipyridyl, 6,6'-dibromo-2,2'-dipyridyl, 4,4'-dinonyl-2,2'-dipyridyl, 2,2'-biquinolinyl-4,4'-dicarboxylic acid dibutylester, 2,2'-biquinolinyl-4,4'-dicarboxylic acid diheptylester, 6-methyl-2,2'-dipyridyl, 2-(2-pyridinyl)quinoline, 2-pyridin-2-yl-4-pyrrolidin-1-yl-quinoline, 4-piperidin-1-yl-2-pyridin-2-yl-quinoline, and 4-morpholin-4-yl-2-pyridin-2-yl-quinoline.

In formula (II-B), examples of preferred 1,10-phenanthrolines which may be used within the scope of the present invention as ligands for stabilizing 14-electron Schrock-alkylidene complexes of molybdenum or tungsten comprise 1,10-phenanthroline, 4-methyl-1,10-phenanthroline, 5-methyl-1,10-phenanthroline, 2,9-dimethyl[1,10]phenanthroline, 5,6-dimethyl-1,10-phenanthroline, 5-chloro[1,10]phenanthroline, 4,7-dichloro-1,10-phenanthroline, 4,7-dichloro-1,10-phenanthroline, 3,4,7,8-tetramethyl-1,10-phenanthroline, 4,7-diphenyl[1,10]phenanthroline, 2,9-dimethyl-4,7-diphenyl [1,10]phenanthroline, 5-nitro-1,10-phenanthroline, and 4,7-dimethoxy-1,10-phenanthroline.

Yet another preferred embodiment provides a polymerizable composition wherein $R^3$ is selected from the group consisting of $C_1$-$C_{10}$-alkyl or phenyl, which in turn may be substituted with one or more of $C_1$-$C_{10}$-alkyl, phenyl, $C_1$-$C_{10}$-alkoxy, halogen, trifluoromethyl, cyano and nitro residues.

In another embodiment, $R^3$ is chosen from formula (IV-A) and (IV-B):

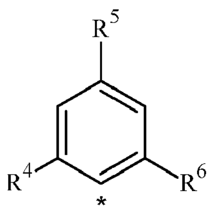
(IV-A)

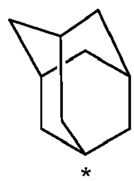
(IV-B),

wherein $R^4$, $R^5$ and $R^6$ are independently chosen for the group consisting of H, halogen, trifluoromethyl, methyl, ethyl, propyl, butyl, isopropyl and tert-butyl.

According to another embodiment, a polymerizable composition is provided wherein $R^1$ and $R^2$ are independently selected from the group consisting of H, $C_1$-$C_{10}$-alkyl and phenyl, wherein the $C_1$-$C_{10}$-alkyl and phenyl may in turn be substituted with one or more of $C_1$-$C_{10}$-alkyl, phenyl, $C_1$-$C_{10}$-alkyloxy, halogen, trifluoromethyl, cyano and nitro residues.

According to yet another embodiment, a polymerizable composition is provided wherein $R^1$ is H and wherein $R^2$ is according to formula (V):

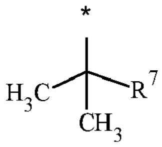

(V),

wherein $R^7$ is methyl or phenyl.

Yet another embodiment provides a polymerizable composition wherein X is chosen from formula (VI-A) and Y is chosen from formula (VI-B):

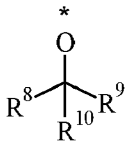

(VI-A)

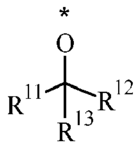

(VI-B),

wherein $R^8$, $R^9$, $R^{10}$, $R^{11}$, $R^{12}$ and $R^{13}$ are independently chosen from the group consisting of H, methyl and trifluoromethyl.

Another embodiment relates to a polymerizable composition wherein X and Y are independently chosen from formula (VII), wherein $R^{14}$ is halogen:

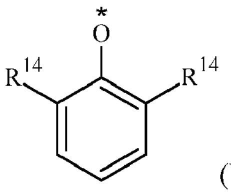

(VII).

As to compounds X and Y, X may be equal to Y, or X and Y may be different. X is preferably selected from pyrrole and pyrazole, optionally substituted pyrrole and pyrazole, preferably substituted with one or more of $C_{1-5}$-alkyl, $C_{1-5}$-alkoxy or phenyl. Y may be selected from O-$R^{15}$, wherein $R^{15}$ is alkyl, preferably $C_{1-10}$-alkyl, or aryl, optionally substituted alkyl or aryl. In one embodiment, $R^{15}$ is selected from $C_{1-5}$-alkyl, independently substituted with one or more of halogen or phenyl; or is phenyl, independently substituted with one or more of $C_{1-5}$-alkyl, $C_{1-5}$-alkyl substituted with one or more of halogen, $C_{1-5}$-alkoxy, phenyl, halogen, $-(CH_2)_4-$ to form an annulated ring with phenyl, and -(CH=CH-CH=CH)- to form an annulated ring with phenyl, or with O-silyl.

The term "silyl" may be any silyl group forming a covalent bond between silicon and oxygen. Suitable silyl groups are e.g. t-butyldimethylsilyl (TBS, TBDMS), trimethylsilyl (TMS), triethylsilyl (TES), triisopropylsilyl (TIPS), *tert*-butyldiphenylsilyl (TBDPS), and triphenylsily.

A preferred embodiment provides a polymerizable composition wherein X and Y are according to formula (VIII):

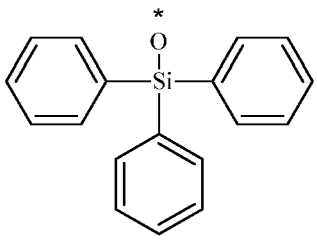

(VIII).

In another embodiment, the polymerizable composition is provided wherein X is chosen from formula (IX-A) and Y is chosen from formula (IX-B):

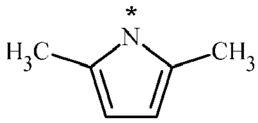
(IX-A)
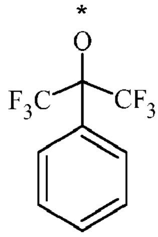
(IX-B).

Particularly preferred polymerizable compositions according to an embodiment of the invention are characterized in that the one or more 18-electron Schrock alkylidene adducts are chosen from formula (II-C) and formula (II-D):

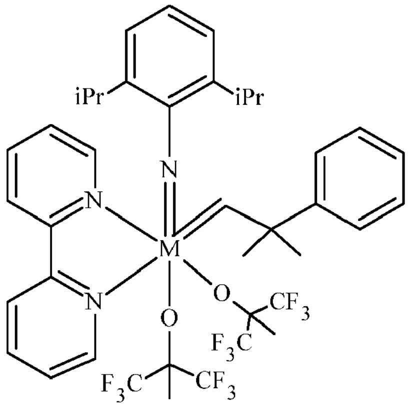
(II-C)
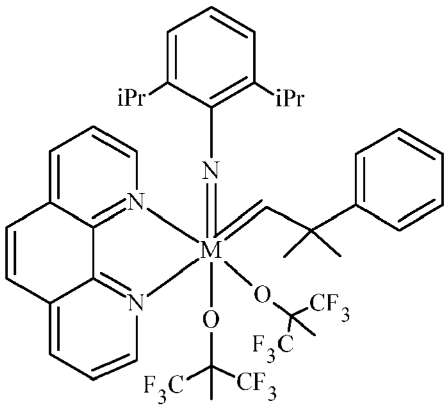
(II-D),

wherein M is Mo or W, preferably Mo, and wherein iPr represents isopropyl.

In a polymerizable composition according to an embodiment, the cyclic olefinic monomers having a ring strain of greater than 85 kJ/mol are preferably chosen from the group consisting of dicyclopentadiene (DCPD), norbornene or derivatives thereof, norbornadiene or derivatives thereof, and combinations thereof.

Suitable norbornene derivates are for instance disclosed in WO2020/072776A1, incorporated herein by reference in its entirety, particularly pages 3-5, formula (II).

The norbornene-based monomer is a compound having a norbornene structure represented by the following formula (1):

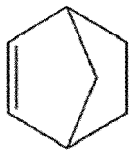
(1)

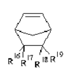

The norbornene-based monomer includes norbornene-based monomers that do not have a ring that condenses with a norbornene ring in the molecule; tricyclic or higher polycyclic norbornene-based monomers; and the like. The monomer can be used alone or in a mixture of two or more kinds. Specific examples of the norbornene-based monomers that do not have a ring that condenses with a norbornene ring in the molecule include norbomenes that are unsubstituted or have an alkyl group, such as norbornene, 5-methylnorbomene, 5-ethylnorbornene, 5-butylnorbomene, 5-hexylnorbomene, 5-decylnorbomene, 5-cyclohexylnorbomene, and 5-cyclopentylnorbomene; norbomenes having an alkenyl group, such as 5-ethylidenenorbornene, 5-vinylnorbomene, 5-propenylnorbomene, 5-cyclohexenylnorbomene, and 5-cyclopentenylnorbomene; norbomenes having an aromatic ring, such as 5-phenylnorbomene; norbomenes having a polar group including an oxygen atom, such as 5-methoxycarbonylnorbomene, 5-ethoxycarbonylnorbomene, 5-methyl-5-methoxycarbonylnorbomene, 5-methyl-5-ethoxycarbonylnorbomene, norbonenyl-2-methylpropionate, norbomenyl-2-methyloctanate, 5-hydroxymethylnorbomene, 5,6-di(hydroxymethyl)norbomene, 5,5-di(hydroxymethyl)norbomene, 5-hydroxy-i-propylnorbomene, 5,6-dicarboxynorbomene, and 5-methoxycarbonyl-6-carboxynorbomene; norbomenes

having a polar group including a nitrogen atom, such as 5-cyanonorbomene, and the like.

The tricyclic or higher polycyclic norbornene-based monomer refers to a norbornene-based monomer including a norbornene ring and one or more rings condensed with the norbornene ring in the molecule. Specific examples thereof include a monomer represented by formula (2) given below:
wherein each of $R^{16}$ to $R^{19}$ is independently a hydrogen atom; a halogen atom; a hydrocarbon group having from 1 to 20 carbon atoms which may have a substituent; or a substituent including a silicon atom, an oxygen atom, or a nitrogen atom, wherein $R^{17}$ and $R^{18}$ are together bonded to each other to form a ring; or a monomer represented by formula (3) given below:

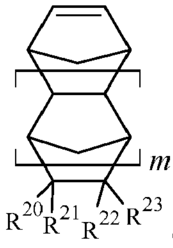
(3)

wherein each of $R^{20}$ to $R^{23}$ is independently a hydrogen atom; a halogen atom; a hydrocarbon group having from 1 to 20 carbon atoms which may have a substituent; or a substituent including a silicon atom, an oxygen atom, or a nitrogen atom, wherein $R^{20}$ and $R^{21}$ or $R^{22}$ and $R^{23}$ may be bonded to each other to form a ring; and m is 1 or 2.

The monomer represented by formula (2) includes, for example, dicyclopentadiene, methyldicyclopentadiene, tricyclo[5.2.1.$0^{2,6}$]deca-8-ene, tetracyclo[9.2.1.$0^{2,10}$.$0^{3,8}$]tetradeca-3,5,7,12-tetraene (also referred to as 1,4-methano-1,4,4a,9a-tetrahydro-9H-fluorene), tetracyclo[10.2.1.$0^{2,11}$.$0^{4,9}$]pentadeca-4,6,8,13-tetraene (also referred to as 1,4-methano-1,4,4a,9,9a,10-hexahydroanthracene), and the like.

There are two kinds of steric isomers for the dicyclopentadienes: endo-dicyclopentadiene (formula 4) and exo-dicyclopentadiene (formula 5). When referring to dicyclopentadiene the endo-dicyclopentadiene form is actually meant. The main component of the dicyclopentadiene, which is presently industrially available, is endo-dicyclopentadiene, and the content of the exo-dicyclopentadiene may be from 0 to 2% by mass or so.

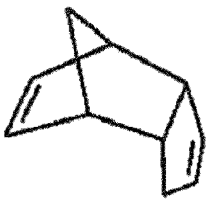
(4)
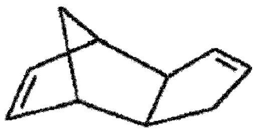
(5)

The monomer represented by formula (3) includes tricyclopentadiene, and tetracyclododecenes, wherein m is 1; and hexacycloheptadecenes, wherein m is 2. Specific examples of the tetracyclododecenes include tetracyclododecenes which are unsubstituted or have an alkyl group, such as tetracyclododecene, 8-methyltetracyclododecene, 8-ethyltetracyclododecene, 8-cyclohexyltetracyclododecene, and 8-cyclopentyltetracyclododecene; tetracyclododecenes which have a double bond outside the ring, such as 8-methylidenetetracyclododecene, 8-ethylidenetetracyclododecene, 8-vinyltetracyclododecene, 8-propenyltetracyclododecene, 8-cyclohexenyltetracyclododecene, and 8-cyclopentenyltetracyclododecene; tetracyclododecenes which have an aromatic ring, such as 8-phenyltetracyclododecene; tetracyclododecenes which have a substituent including an oxygen atom, such as 8-methoxycarbonyltetracyclododecene, 8-methyl-8-methoxycarbonyltetracyclododecene, 8-hydroxymethyltetracyclododecene, 8-carboxytetracyclododecene, tetracyclododecene-8,9-dicarboxylic acid, and tetracyclododecene-8,9-dicarboxylic acid anhydride; tetracyclododecenes which have a substituent including a nitrogen atom, such as 8-cyanotetracyclododecene and tetracyclododecene-8,9-dicarboxylic acid imide; tetracyclododecenes which have a substituent including a halogen atom, such as 8-chlorotetracyclododecene; tetracyclododecenes which have a substituent including a silicon atom, such as 8-trimethoxysilyltetracyclododecene; and the like.

Specific examples of the hexacycloheptadecenes include hexacycloheptadecenes which are unsubstituted or have an alkyl group, such as hexacycloheptadecene, 12-methylhexacycloheptadecene, 12-ethylhexacycloheptadecene, 12-cyclohexylhexacycloheptadecene, and 12-cyclopentylhexacycloheptadecene; hexacycloheptadecenes which have a double bond outside the ring, such as 12-methylidenehexacycloheptadecene, 12-ethylidenehexacycloheptadecene, 12-vinylhexacycloheptadecene, 12-propenylhexacycloheptadecene, 12-cyclohexenylhexacycloheptadecene, and 12-cyclopentenylhexacycloheptadecene; hexacycloheptadecenes which have an aromatic ring, such as 12-phenylhexacycloheptadecene; hexacycloheptadecenes which have a substituent including an oxygen atom, such as 12-methoxycarbonylhexacycloheptadecene, 12-methyl-12-methoxycarbonylhexacycloheptadecene, 12-hydroxymethylhexacycloheptadecene, 12-carboxyhexacycloheptadecene, hexacycloheptadecene-12,13-dicarboxylic acid, and hexacycloheptadecene-12,13-dicarboxylic acid anhydride; hexacycloheptadecenes which have a substituent including a nitrogen atom, such as 12-cyanohexacycloheptadecene and hexacycloheptadecene-12,13-dicarboxylic acid imide; hexacycloheptadecenes which have a substituent including a halogen atom, such as 12-chlorohexacycloheptadecene; hexacycloheptadecenes which have a substituent including a silicon atom, such as 12-trimethoxysilylhexacycloheptadecene; and the like.

These norbornene-based monomers can be used alone or in a combination of two or more kinds.

Among these norbornene-based monomers, the tricyclic or higher polycyclic norbornene-based monomers are preferred, and tricyclic, tetracyclic, or pentacyclic norbornene-based monomers are more preferred, from the viewpoint of being readily available, having excellent reactivity and obtaining a resin molded article having excellent heat resistance.

In addition, it is preferable that a cross-linkable norbornene-based monomer having two or more reactive double bonds (a norbornene-based monomer that gives a ring-opening polymer having a cross-reactive double bond), such as a symmetric cyclopentadiene trimer, is used together with another norbornene-based monomer (a norbornene-based monomer that gives a ring-opening polymer without a cross-reactive double bond), from the viewpoint of obtaining a heat-curable ring-opening polymer. It is preferable that a proportion of the cross-linkable norbornene-based monomer used in a case where the cross-linkable norbornene-based monomer is used is from 2 to 30% by mass of the entire norbornene-based monomers.

Further, a monomer which is ring-opening copolymerizable with the norbornene-based monomer may be used within the range that would not impair the object of the present invention. The monomer as mentioned above includes monocyclic cycloolefins, such as cyclobutene, cyclopentene, cyclopentadiene, cyclooctene, cyclododecene, and the like.

Apart from the cyclic olefinic monomers having a ring strain of greater than 85 kJ/mol, the polymerizable composition according to an embodiment further comprises cyclic olefinic monomers chosen from the group consisting of cyclopentene, 1,4-cyclohexadiene, cycloheptene, *cis*-cyclooctene, *cis*,*cis*-1,5-cyclooctadiene, 1,3,5,7-cyclooctatetraene, cyclododecene, *trans*,*trans*,*cis*-1,5,9-cyclododecatriene, derivatives thereof and combinations thereof.

In useful embodiments, the composition may also comprise a chain transfer agent, for instance a linear olefin having substituted groups. Suitable chain transfer agents include vinylnorbornene, 1-hexene, 2-hexene and other aliphatic olefins; styrene, divinylbenzene, and other vinyl aromatic olefins; olefins having alicyclic hydrocarbon groups such as vinylcyclohexane; vinylethers; methylvinylketone, as well as substituted (meth)acrylic acids and their salts, such as vinyl(meth)acrylate, allyl(meth)acrylate, and compounds such as allyltrivinylsilane, allylmethyldivinylsilane, allyldimethylvinylsilane, and 4-vinylaniline. Such chain transfer agents may be used alone or in combination and are generally added in an amount ranging from 0.01 to 10 parts by weight, and preferably 0.1 to 5 parts by weight with respect to 100 parts by weight of the monomers.

Other additives may also be added to the composition such as flame retardants, light stabilizers, pigments, dyes and other colorants, as well as foaming agents for instance. Suitable flame retardants include but are not limited to phosphorus, nitrogen and halogen containing flame retardants, metal hydroxides such as aluminum hydroxide for instance, and antimony compounds such as antimony trioxide. Particulate inorganic fillers may also be included such as but not limited to calcium carbonate, calcium hydroxide, calcium silicate, calcium sulfate, aluminum trioxide, magnesium hydroxide, titanium oxide, zinc oxide, barium titanate, silica, alumina, clay, and carbon black.

In preferred embodiments, fillers may be added to the composition of the present invention as substrate materials. Both inorganic and organic fillers may be used without any limitation, whereby an inorganic filler is preferred. Suitable inorganic fillers for instance include metal particles of iron, copper, nickel, gold, silver, aluminum, lead, and tungsten; carbon particles such as carbon black, graphite, activated carbon, carbon micro-balloons and the like; inorganic oxide particles such as silica, alumina, titanium oxide, iron oxide, zinc oxide, magnesium oxide, and the like; inorganic carbonate particles such as calcium carbonate and magnesium carbonate; calcium sulfate; inorganic silicate particles such as talc, clay, mica, kaolin, fly ash, montmorillonite, calcium silicate, and glass particles; as well as particles of titanate, aluminum nitride and silicon carbide. Specific examples of fibrous inorganic fillers include glass fibers, wollastonite, potassium titanate, xonolite, basic magnesium sulfate, aluminum borate, tetrapod-type zinc oxide, gypsum fibers, phosphate fibers, alumina fibers, and whiskers, whisker-like calcium carbonate, whisker-like boehmite, and the like. In addition, the fibrous inorganic filler may be one whose surface has been subjected to hydrophobic treatment, similar to the particulate inorganic filler described above.

Suitable organic fillers may for instance comprise wood, starch, lignin, organic pigment, and polymer particles such as those of polystyrene, polyamide, polyolefins such as polyethylene and polypropylene, polyvinylchloride, elastomers and/or waste polymers. It is also possible to add functional fillers, such as piezoelectric ceramics, fillers that change static/conductive properties such as carbon nanotubes, and rheology modifiers. The fillers may be provided with a sizing composition in accordance with the invention.

A preferred embodiment provides a polymerizable composition, further comprising elastomer, such as up to 20 wt. %, more preferably up to 10 wt. %, based on the weight of the polymerizable composition, preferably elastomer chosen from the group consisting of styrene-butadiene-styrene (SBS), styrene isoprene styrene (SIS), ethylene propylene rubber (EPR), ethylene propylene diene monomer rubber (EPDM), polyolefin elastomers (POE), trans-polyoctenamer rubber (TOR) and combinations thereof. *Trans*-polyoctenamer rubber (TOR) may be based on cyclic polybutadiene or cyclic isoprene rubber. It may be produced in a ring opening metathesis polymerization (ROMP) starting from 1,5-cyclooctadiene to cyclooctene as an intermediate. The double bond of the cyclooctene monomer is preserved so that the resulting trans-polyoctenamer typically contains a double bond at every eighth carbon atom.

According to another embodiment of the invention the composition further comprises reinforcing fibers as an adhering substrate. Suitable reinforcing fibers to be used in the present invention can be chosen within wide ranges. It is possible for instance to use inorganic fibers, such as glass fibers, carbon and graphite fibers, alumina fibers, tungsten fibers, molybdenum fibers, titanium fibers, steel fibers, boron fibers, silicon carbide fibers, and silica fibers. Other suitable fibers include organic fibers such as aramid fibers, ultrahigh molecular weight polyethylene fibers, liquid crystalline and other polyester fibers, and the like, as well as natural fibers and reinforcements. Preferred reinforcing fibers comprise glass and carbon fibers, of which E-glass, R-glass, S-glass and S2-glass fibers are used most preferably.

The reinforcing fibers can be applied in any physical form, *i.e.* as mono- and multifilaments, or in the form of strands and yarns, as woven fabric or according to any other textile structure, as short fibers or as continuous fibers, or in the form of a preimpregnated sheet ('prepreg'). Any combination of different types of fibers is also possible. The amount of the reinforcing fibers may be chosen within wide ranges, but suitable amounts generally range from 30 - 70 vol.%, a fiber volume fraction of 55-65 vol.% being preferred in most applications.

In other embodiments of the invention, the reinforcing fibres are provided with a coupling agent that is incorporated in a sizing composition. The sizing composition is configured to provide an improved adhesion of the composition to an adhering substrate material, such as reinforcing fibers. The adhering substrate material is preferably sized with commercially available silane compounds that do not interfere with the used olefin metathesis catalysts, and are compatible with cyclic olefin polymers, in particular polydicyclopentadiene.

The sizing formulation applied onto the adhering substrate, in particular the reinforcing fibers, typically further comprises a film former apart from the coupling agent and optionally a lubricant. The film former typically comprises a film forming polymer. Any components of a sizing formulation that do not substantially interfere with the metathesis catalyst operation and/or substantially decreases the cyclic olefin polymerization reaction are considered to be compatible with the composition and may generally be used in the invention.

Film formers that are compatible with and/or do not interfere with ring opening metathesis polymerization (ROMP) are preferably used and comprise epoxies, polyesters, polyurethanes, polyolefins, and/or polyvinyl acetates. Other common film formers that do not adversely affect the performance of the cyclic olefin metathesis catalyst may also be used. Film formers are typically used as nonionic, aqueous emulsions, and combinations of different film formers may be used if desired.

In a preferred embodiment, particularly also involving the use of reinforcing fibers, the polymerizable composition further comprises vinyl-containing monomers and a polymerization initiator for the vinyl-containing monomers, preferably (meth)acrylic monomers and peroxide initiator. This composition may promote adhesion to an adhering substrate such as reinforcing fibers or a polyolefin substrate. Preferred unsaturated compounds comprise ethylenically unsaturated compounds, which are here understood to mean vinyl aromatic compounds such as styrene, alpha-methylstyrene, para-methylstyrene, aminostyrene, hydroxystyrene, divinyl benzene, vinyl toluene; allyl compounds such as monoallyl esters and/or ethers and diallyl esters and/or ethers; vinyl ether and vinyl ester compounds such as vinyl benzoate; and (meth)acrylic compounds such as (meth)acrylic acids and their esters. Particularly preferred multifunctional unsaturated compounds comprise an acrylic and/or methacrylic compound. Suitable (meth)acrylic compounds include but are not limited to ethyleneglycol di(meth)acrylate, propanediol di(meth)acrylate, butanediol di(meth)acrylate, diethyleneglycol di(meth)acrylate, triethyleneglycol di(meth)acrylate, tetraethyleneglycol di(meth)acrylate, polyethyleneglycol di(meth) acrylate and other bifunctional compounds, as well as trimethylolpropane tri(meth)acrylate, trimethylolethane (tri) methacrylate, trimethylolpropanepropyleneoxide-modified tri (meth)acrylate and other trifunctional compounds. Combinations of unsaturated compounds may also be used.

Suitable curing agents for the vinyl-containing monomers include a radical source such as a peroxide, a hydroperoxide, a perester and/or a perketone compound, including cyclic and linear compounds. A linear (hydro) peroxide is particularly preferred as curing agent. Suitable peroxides include but are not limited to alkylperoxides, arylperoxides, and aralkyl or alkaryl peroxides. Secondary and tertiary aliphatic and aromatic hydroperoxides, such as tert-butyl hydroperoxide, tert-amyl hydroperoxide, and cumene hydroperoxide, are particularly preferred.

In another embodiment of the invention, particularly also involving the use of reinforcing fibers, the composition further comprises the adhesion promoter composition disclosed in WO2015/130802A1, herein incorporated by reference in its entirety. The adhesion promoter composition comprises isocyanate-containing monomers, preferably a pre- reacted mixture comprising at least one compound containing at least two isocyanate groups and at least one compound

comprising a heteroatom-containing functional group and a metathesis active olefin, where the adhesion promoter composition is storage stable and/or possesses in- resin storage stability when added to a resin composition, particularly a cyclic olefin resin composition, such as a ROMP composition.

The amount of monomers in the composition may be selected within a broad range but is preferably at least 20 wt.% of the weight of the polymerizable composition, preferably at least 50 wt.%, more preferably at least 90 wt.%. The remaining amount comprises fillers and other additives in the composition.

The amount of cyclic monomers in the composition may also be selected within a broad range. In accordance with an embodiment of the invention, the cyclic olefinic monomers in the polymerizable composition constitute at least 80 mol% of the monomers, preferably at least 90 mol%.

In yet another embodiment, the polymerizable composition is provided such that the cyclic olefinic monomers having a ring strain of greater than 85 kJ/mol constitute at least 50 mol% of the monomers, preferably between 50 and 100 mol%, such as between 50 and 80 mol%.

A combination of different cyclic olefinic monomers may be used in the polymerizable composition. A preferred embodiment of the polymerizable composition is characterized in that the monomers comprise dicyclopentadiene (DCPD), cis,cis-1,5-cyclooctadiene (COD) and optionally ethylidene norbornene (ENB) and/or tricyclopentadiene (TCPD).

Particularly preferred is a polymerizable composition wherein the dicyclopentadiene (DCPD), *cis,cis*-1,5-cyclooctadiene (COD), tricyclopentadiene (TCPD) and ethylidene norbornene (ENB) are present in the following amounts:

- 50 - 90 mol% of dicyclopentadiene;
- 0-30 mol% of cis,cis-1,5-cyclooctadiene; and
- 0 - 20 mol% of ethylidene norbornene and/or tricyclopentadiene.

wherein the combined percentages of dicyclopentadiene, *cis,cis*-1,5-cyclooctadiene and ethylidene norbornene and/or tricyclopentadiene add up to 100 mol% of the monomers.

Apart from the monomers, the polymerizable composition further comprises the catalyst system comprising the one or more 18-electron Schrock alkylidene adducts, as claimed, in a suitable amount to catalyze metathesis ring-opening polymerization of the cyclic olefinic monomers. In a preferred embodiment, the molar ratio of the cyclic olefinic monomers to the one or more 18-electron Schrock alkylidene adducts is between 500 and 200000, preferably between 10000 and 150000, more preferably between 20000 and 80000

The polymerizable composition may further contain a catalyst retarder capable of extending working life time before polymerization starts. Suitable polymerization reaction retarders include but are not limited to phosphite compounds, such as those disclosed in EP2460587, incorporated herein by reference in its entirety.

As disclosed above the polymerizable composition turned out to be auto-catalytic at room temperature and does not need a chemical activation. A preferred embodiment of the invention therefore relates to a polymerizable composition wherein the polymerizable composition does not comprise a Lewis acid reagent.

Even more preferred is a polymerizable composition according to an embodiment wherein the polymerizable composition does not comprise $MgCl_2$, $MgBr_2$, $MgI_2$, $MnCl_2$, $MnBr_2$, $MnI_2$, $FeCl_3$, $AlCl_3$, $CuCl_2$, $ZnCl_2$, $ZnBr_2$, $ZnI_2$, $Zn(triflate)_2$ and $Zn(trifluoroacetate)_2$.

In an embodiment, the polymerizable composition does not comprise $MgCl_2$. In an embodiment, the polymerizable composition does not comprise $MgBr_2$. In an embodiment, the polymerizable composition does not comprise $MgI_2$. In an embodiment, the polymerizable composition does not comprise $MnCl_2$. In an embodiment, the polymerizable composition does not comprise $MnBr_2$. In an embodiment, the polymerizable composition does not comprise $MnI_2$. In an embodiment, the polymerizable composition does not comprise $FeCl_3$. In an embodiment, the polymerizable composition does not comprise $AlCl_3$. In an embodiment, the polymerizable composition does not comprise $CuCl_2$. In an embodiment, the polymerizable composition does not comprise $ZnCl_2$. In an embodiment, the polymerizable composition does not comprise $ZnBr_2$. In an embodiment, the polymerizable composition does not comprise $ZnI_2$. In an embodiment, the polymerizable composition does not comprise $Zn(triflate)_2$. In an embodiment, the polymerizable composition does not comprise $Zn(trifluoroacetate)_2$. In an embodiment, the polymerizable composition does not comprise chlorosilanes.

The invention in another aspect also relates to a ring-opening metathesis polymerization process. According to the invention, the ring-opening metathesis polymerization process comprises the steps of:

(a) providing a polymerizable composition as claimed;
(b) subjecting the polymerizable composition to ring-opening metathesis polymerization.

It may have advantages according to another embodiment to carry out the ring-opening metathesis polymerization process such that step (a) is preceded by suspending or dissolving the one or more 18-electron Schrock alkylidene adducts in an inert carrier, preferably an inert liquid carrier, and by adding the resulting suspension or solution to the other ingredients of the polymerizable composition.

Suitable inert liquid or solid carriers may include linear aliphatic hydrocarbons such as n-pentane, *n*-hexane, *n*-heptane, alkylbenzene or liquid paraffin, as well as alicyclic hydrocarbons such as cyclopentane, cyclohexane, alkyl substituted cyclohexane, di- and tricycloheptane, and cyclooctane to name a few, aromatic hydrocarbons such as benzene, toluene, xylene and others; nitrogen-containing solvents such as nitromethane, nitrobenzene, and acetonitrile, and oxygen-containing solvents such as diethyl ether and tetrahydrofuran. Ketones such as cyclohexanone, cyclopentanone, methylethylketone (MEK) may also be used, as well as esters such as ethyl acetic acid, alkyl maleic acid and the like. Paraffin wax may also be used.

As already elucidated above, the ring-opening metathesis polymerization process does not require activation by adding a Lewis acid reagent. Therefore according to a preferred embodiment, the ring-opening metathesis polymerization process is characterized in that no Lewis acid reagent is added, more preferably wherein no $MgCl_2$, $MgBr_2$, $MgI_2$, $MnCl_2$, $MnBr_2$, $MnI_2$, $FeCl_3$, $AlCl_3$, $CuCl_2$, $ZnCl_2$, $ZnBr_2$, $ZnI_2$, Zn(triflate)$_2$ and Zn(trifluoroacetate)$_2$ is added.

In an embodiment, no $MgCl_2$ is added. In an embodiment, no $MgBr_2$ is added. In an embodiment, no $MgI_2$ is added. In an embodiment, no $MnCl_2$ is added. In an embodiment, no $MnBr_2$ is added. In an embodiment, no $MnI_2$ is added. In an embodiment, no $FeCl_3$ is added. In an embodiment, no $AlCl_3$ is added. In an embodiment, no $CuCl_2$ is added. In an embodiment, no $ZnCl_2$ is added. In an embodiment, no $ZnBr_2$ is added. In an embodiment, no $ZnI_2$ is added. In an embodiment, no Zn(triflate)$_2$ is added. In an embodiment, no Zn(trifluoroacetate)$_2$ is added. In an embodiment, no chlorosilanes are added.

Methods of manufacturing a polymerized article from the polymerizable composition by a ring-opening metathesis polymerization process may include but are not limited to those formed by state-of-the-art manufacturing techniques, such as casting, centrifugal casting, pultrusion molding, injection pultrusion molding, filament winding, rotational molding, 3D printing and open mold molding. The composition may also be used in semi-finished products such as prepregs or sheet molding compounds (SMC).

When using a closed mold process for manufacturing a polymerized article, a preferred ring-opening metathesis polymerization process is performed under an inert atmosphere, preferably under an $N_2$ atmosphere.

Another preferred embodiment of the invention relates to a ring-opening metathesis polymerization process wherein step (a) comprises injecting the polymerizable composition into a closed mold. The mold may be empty before injecting the polymerizable composition. More preferably however, the mold comprises reinforcing fibers before injecting the polymerizable composition in such process. Such techniques include reaction injection molding (RIM), resin transfer molding (RTM), vacuum assisted resin infusion (VARI), Seeman's Composite Resin Infusion Molding Process (SCRIMP), Reinforced Reaction Injection Molding (RRIM), Structural Reaction Injection Molding (SRIM), thermal expansion transfer molding (TERM), resin injection recirculation molding ( RICM), controlled atmospheric pressure resin infusion (CAPRI), and the like.

Subjecting the composition to conditions effective to promote a ROMP of the cyclic olefinic monomers may involve actively heating the composition to a suitable polymerization temperature during a suitable time interval, optionally at a pressure above 0.1 MPa. The heating temperature in an embodiment of the ROMP process is in a range of RT to 200° C, more preferably 50° C to 200° C, even more preferably 120° C to 150° C. The heating times preferably are in a range of 0.1 to 180 minutes, or even longer, depending on the size of the article to be manufactured. The pressure applied during moulding may be selected in accordance with the manufacturing method used and may be as low as a 0.1 to 0.5 MPa, for instance when using RTM. Vacuum or reduced pressures may also be used.

The active heating of the composition may be carried out according to procedures well known to one skilled in the art. When a processing method is used which makes use of a mould to shape the article, heating typically involves heating the mould, for instance to temperatures between 40 and 80°C. Processes using a resin bath to wet reinforcing fibers for instance, typically would involve heating the resin bath.

Another aspect of the invention relates to a polymerized article manufactured from the polymerized article. Polymerized articles may be used in a variety of applications, including but not limited to aerospace components, marine components, automotive components, sporting goods, electrical components, medical components, and military components. In useful embodiments the polymerized article may be a turbine component such as a turbine blade component or turbine blade. Examples of aerospace components may include but are not limited to fuselage skins, wings, fairings, doors, access panels, and stiffeners for instance. Examples of automotive components may include but are not limited to body panels, fenders, spoilers, protective plates, hoods, pillars, leaf springs and doors. Other examples of suitable articles include bridges, pipes, pressure vessels, containers, and so on.

Examples of military components include but are not limited to ballistic resistant armor plates and other structures for protecting personnel or equipment. Suitable sporting goods may include tennis rackets, hockey sticks, golf club shafts and the like.

Polymerized articles manufactured from the polymerizable composition are advantageous in that they contain a

relatively low amount of the catalyst system as claimed. Accordingly, a polymerized article according to a preferred embodiment comprises between 5 and 100 ppm of the combined amounts of the metals Mo and W, based on the weight of the polymerized article, obtainable by the ring-opening metathesis polymerization process as claimed. Prior art ROMP articles typically have much higher amounts of Mo and W originating from the catalyst in them, typically 10 times as high.

Thus, the invention has been described by reference to certain embodiments discussed above. It will be recognized that these embodiments are susceptible to various modifications and alternative forms well known to those of skill in the art.

Furthermore, for a proper understanding of this document and its claims, it is to be understood that the verb '*to comprise*' and its conjugations are used in its non-limiting sense to mean that items following the word are included, but items not specifically mentioned are not excluded. In addition, reference to an element by the indefinite article '*a*' or '*an*' does not exclude the possibility that more than one of the element is present, unless the context clearly requires that there be one and only one of the elements. The indefinite article '*a*' or '*an*' thus usually means '*at least one*'.

**EXPERIMENTAL SECTION**

The present invention will now be described more specifically with reference to examples and comparative examples, without however being limited to these examples. It is to be noted that, in the examples and comparative examples, "parts" and "%" are based on weight basis unless otherwise noted.

***General remarks***

The 14-electron Schrock alkylidene and the 18-electron Schrock alkylidene adducts used in the following examples as catalysts were prepared in accordance with methods disclosed in the literature. Their chemical structures are as follows:

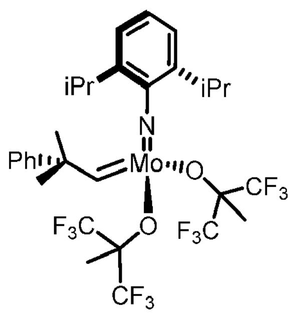

**1**

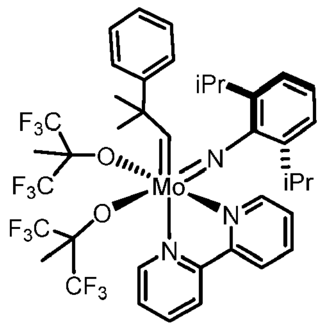

**2**

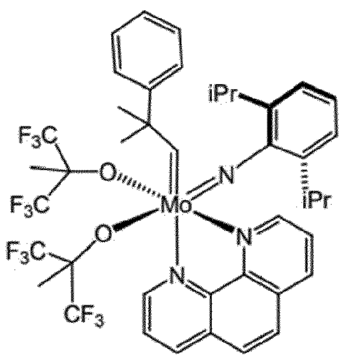

**3**

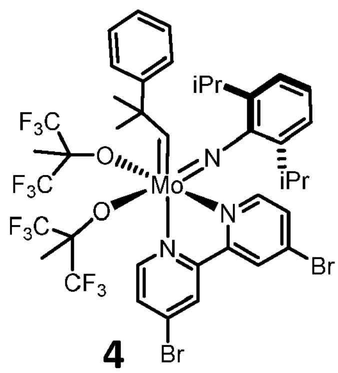

**4**

The stability constants K of catalysts **2, 3** and **4** (18-electron Schrock alkylidene adducts) were determined at 25 °C in deuterated benzene ($C_6D_6$). The more stable the adduct is, the less the adduct dissociates when dissolved in deuterated benzene ($C_6D_6$) at 25 °C. Accordingly, a higher stability constant K, expressed in L/mol, corresponds to less dissociation. The stability constant K is measured after dissolving the 18-electron Schrock alkylidene adducts in deuterated benzene ($C_6D_6$) at 25 °C at a concentration of 0.01 M. It is calculated from NMR measurements by using

the integrals of the peaks in the $^1$H spectra of the alkylidene in adduct (complexed) form ($I_{complex}$) and in free form ($I_{free}$) according to the following formula (see also H. Gulyás et al., Communications Chemistry, 2021, 4(7), pp 1-11, including the Supplementary Information, which is incorporated herein by reference in its entirety):

$$K = \frac{I_{\text{complex}} \cdot c}{(I_{\text{free}} \cdot c)^2}$$

wherein c is the molar concentration (mol/L) of the complex, being 0.01 M. The alkylidene peaks are sufficient for determining the K values. $CF_3$ peaks in $^{19}$F spectra, if present, can act as an additional confirmation. The alkylidene peaks of the adduct and the free form have different chemical shifts in $^1$H NMR. It therefore is sufficient to integrate the signals of the free form and the adduct.

It should be mentioned that for very stable 18-electron Schrock alkylidene adducts, the above method may not be accurate enough since the alkylidene peaks may be so small that they are virtually unobservable. In that case the value of the stability constant is assumed to be >1,000,000 L/mol.

Catalysts **2** and **3** had a stability constant K at 25°C in deuterated benzene ($C_6D_6$) of >1,000,000 L/mol. Catalyst **4** had a stability constant K at 25°C in deuterated benzene ($C_6D_6$) of 9000 L/mol.

All process steps were carried out under an inert atmosphere (using Schlenk techniques or an argon glovebox). Molecular sieves were heated overnight at 200 °C under vacuum to get activated before use. Solvents were purchased as 99+ % or HPLC grade and dried over molecular sieves. Deuterated solvents were bought from Eurisotop and dried over 3Å molecular sieves and stored inside a glovebox.

Catalyst stock solutions were prepared using chlorobenzene as solvent at a concentration of 0.037 M. The catalyst stock solutions were stored in a glove box freezer at - 30 °C:

- Catalyst **1:** 0.037 M (28.3 mg in 1 mL of chlorobenzene);
- Catalyst **2:** 0.037 M (34.1 mg in 1 mL of chlorobenzene);
- Catalyst **3:** 0.037 M (35.0 mg in 1 mL of chlorobenzene); and
- Catalyst **4:** 0.037 M (40.0 mg in 1 mL of chlorobenzene).

In the experiments, the following monomers/monomer mixtures were used:

a) DCPD: 100 % dicyclopentadiene;
b) COD: 100% *cis*,*cis*-1,5-cyclooctadiene;
c) DCPD/TCPD: a mixture of dicyclopentadiene and tricyclopentadiene, with a tricyclopentadiene content of between about 5 and 10 wt.%; and
d) DCPD/ENB/COD: dicyclopentadiene, ethylidene norbornene and *cis,cis*-1,5-cyclooctadiene, with a *cis*,*cis*-1,5-cyclooctadiene content of about 28 wt.% and an ethylidene norbornene content of between about 3.5 and 7 wt.%.

Dicyclopentadiene is a very reactive monomer having a ring strain of about 27 kcal/mol (113 kJ/mol). See I. Njoroge et al., Langmuir, 2017, 33(49), pp 13903-13912. *Cis,cis*-1,5-cyclooctadiene has a ring strain of < < 85 kJ/mol.

The monomers were dried over 3Å molecular sieves for at least 24 h. Then the monomers were filtered over a glass filter (porosity 4) and stored in a glove box. COD was refluxed 24 h over calcium hydride and then distilled and collected under argon atmosphere. Then the distilled COD was extra dried over 3 Å molecular sieves for at least 24 h and filtered over a glass filter (porosity 4) and stored in the glove box.

***Example 1***

Eleven experiments were performed wherein the monomers or monomer mixtures were subjected to ring-opening metathesis polymerization (ROMP) in the presence of a catalyst.

Experiment III was for example performed using the following protocol. The catalyst solution (stock solution of catalyst **2,** 0.037 M, 0.1 mL, 0.0037 mmol) was measured with an Eppendorf micropipette (10-100 µL) and added to a 20 mL scintillation vial. Monomer mixture DCPD/TCPD (9.922 mL, 9.780 g, 74 mmol) was weighed in a second scintillation vial. The monomer mixture was taken up with a syringe and poured onto the catalyst solution. The mixture was slightly shaken to ensure a homogeneous mixing. Then the vial was closed with a cap and the reaction was left to run without stirring until the heat release stopped and the mixture cooled down to room temperature. Conversions were determined by thermogravimetric analyses of the solid polymer obtained. A sample of the polymer obtained was also analyzed by differential scanning calorimetry.

Experiment VII was for example performed using the following protocol. The catalyst solution (stock solution of

catalyst **2,** 0.037M, 0.053 mL, 0.00196 mmol) was measured with an Eppendorf micropipette (10-100 μL) and added to a 20 mL scintillation vial. The monomer mixture DCPD/ENB/COD (5.24 mL, 5.01 g, 40.1 mmol) was weighed in a second scintillation vial. The monomer was taken up with a syringe and poured onto the catalyst solution. The mixture was slightly shaken to ensure a homogeneous mixing. Then the vial was closed with a cap and the reaction was left to run without stirring until the heat release stopped and the mixture cooled down to room temperature. Conversions were determined by thermogravimetric analyses of the solid polymer obtained. A sample of the polymer obtained was also analyzed by differential scanning calorimetry.

The other experiments were performed using a similar protocol. Results are presented in Table 1. The initial temperature is the temperature of the reaction mixture just after pouring the monomer or monomer mixture onto the catalyst solution.

Due to the exothermicity of the ring-opening metathesis polymerization reactions, the temperature rose after onset of the reaction. The onset was defined as the point when the reaction mixture became non-fluid, and the temperature started rising sharply.

As can be inferred from Table 1, catalysts **2** and **3** (18-electron Schrock alkylidene adducts) result in ring-opening metathesis polymerization of cyclic olefinic monomers having high ring strain with high monomer conversion and in polymers with sufficiently high glass transition temperature ($T_g$).

Table 1: Experiments I to XI according to the invention

| **Exp.** | **Cat.** | **Monomer** | **Monomer: catalyst ratio** | **Initial temp.** | **Mixing** | **Onset** | **Convers.** | **$T_g$** |
|---|---|---|---|---|---|---|---|---|
| **(#)** | **(#)** | | **(mol/mol)** | **(°C)** | | **(min.)** | **(%)** | **(°C)** |
| **I** | **2** | DCPD/TCPD | 2000 | RT(a) | | | 97 | 160 |
| **II** | **2** | DCPD/TCPD | 10000 | RT | | | 97 | |
| **III** | **2** | DCPD/TCPD | 40000 | RT | | | 95 | 154 |
| **IV** | **2** | DCPD | 60000 | RT | homogeneous | 10 | 98 | 160 |
| **V** | **2** | DCPD | 80000 | RT | homogeneous | 21 | 95 | 142 |
| **VI** | **2** | DCPD | 100000 | RT | homogeneous | 34 | 91 | 122 |
| **VII** | **2** | DCPD/ ENB/COD | 20000 | RT | | | 76 | |
| **VIII** | **2** | DCPD/ ENB/COD | 40000 | RT to 70 | | | 72 | |
| **IX** | **3** | DCPD/TCPD | 10000 | 85 | | | 90 | 142 |
| **X** | **3** | DCPD/TCPD | 20000 | 85 | | | 91 | |
| **XI** | **3** | DCPD/TCPD | 40000 | 85 | | | 82 | |

[a] RT means room temperature, being between about 20 and 25°C

***Comparative Example 2***

Eight comparative experiments (XII to XIX) were performed using a similar protocol as applied in Example 1. Results are presented in Table 2. It was found that the 14-electron Schrock alkylidene catalyst **1** (no adduct) and the 18-electron Schrock alkylidene adduct **4,** having a stability constant K of < < 250.000 L/mol, were far too active in ring-opening metathesis polymerization of cyclic olefinic monomers having high ring strain, such as DCPD or DCPD-containing monomer mixtures, leading to immediate encapsulation of the catalyst and hardly and formation of polymer. On the other hand, the 14-electron Schrock alkylidene catalyst **1** and the 18-electron Schrock alkylidene adduct **4** could be used in ring-opening metathesis polymerization of cyclic olefinic monomers having much lower ring strain, such as COD.

Table 2: Comparative experiments XII to XIX

| **Exp.** | **Cat.** | **Monomer** | **Monomer: catalyst ratio** | **Onset temp.** | **Mixing** | **Conversion[c]** |
|---|---|---|---|---|---|---|
| | **(#)** | | **(mol/mol)** | **(°C)** | | **(%)** |
| **XII** | **1** | DCPD/TCPD | 10000-20000 | RT[(a)] | immediate encapsulation | n.d. |
| **XIII** | **1** | DCPD | 100000 | RT | immediate encapsulation | n.d. |

(continued)

| Exp. | Cat. | Monomer | Monomer: catalyst ratio | Onset temp. | Mixing | Conversion[c] |
|---|---|---|---|---|---|---|
| | (#) | | (mol/mol) | (°C) | | (%) |
| XIV | 1 | DCPD | 2000000 | RT | immediate encapsulation | n.d. |
| XV | 1 | DCPD/ ENB/COD | 10000-20000 | RT | immediate encapsulation | n.d. |
| XVI | 4 | DCPD/TCPD | 10000 | RT | immediate encapsulation | n.d. |
| XVII | 4 | DCPD/ ENB/COD | 10000 | RT | immediate encapsulation | n.d. |
| XVIII | 1 | COD | 5000 | RT | solid polymer in 1 hour | n.d. |
| XIX | 4 | COD | 20000 | RT | solid polymer in 1 hour | 98 |

(a) RT means room temperature

## Claims

1. Polymerizable composition comprising:

    - monomers, said monomers comprising cyclic olefinic monomers having a ring strain of greater than 85 kJ/mol, preferably greater than 100 kJ/mol;
    - one or more 18-electron Schrock alkylidene adducts chosen from complexes of 14-electron Schrock alkylidene compounds and bidentate ligands according to formula (I):

    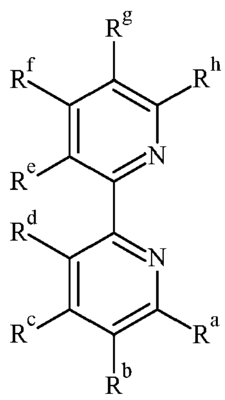

    (I)

    wherein $R^a$, $R^b$, $R^c$, $R^d$, $R^e$, $R^f$, $R^g$ and $R^h$ are independently selected from the group consisting of H, halogen, nitro, cyano, trifluoromethyl, $C_1$-$C_{12}$-alkoxycarbonyl, $C_1$-$C_{12}$-alkyl, 5- to 18-membered aryl, $C_1$-$C_{12}$-alkyloxy and di-($C_1$-$C_4$-alkyl)amino, or residues $R^d$ and $R^e$ are connected to one another while forming a 6-membered ring wherein $R^d$ and $R^e$ together form a group $C(R^i)=C(R^j)$ wherein $R^i$ and $R^j$ are independently selected from the group consisting of H, halogen, nitro, cyano, trifluoromethyl, $C_1$-$C_{12}$-alkoxycarbonyl, $C_1$-$C_{12}$-alkyl, 5- to 18-membered aryl, $C_1$-$C_{12}$-alkyloxy and di-($C_1$-$C_4$-alkyl)amino,
    wherein the one or more 18-electron Schrock alkylidene adducts have a stability constant K greater than 250,000 $L \cdot mol^{-1}$ at 25°C in deuterated benzene ($C_6D_6$) as determined in accordance with the protocol defined in the detailed description, preferably greater than 500,000 $L \cdot mol^{-1}$; and

    - less than 10 wt.% of an inert solvent, based on the weight of the polymerizable composition, preferably less than 5 wt%.

2. Polymerizable composition according to claim 1, wherein the one or more 18-electron Schrock alkylidene adducts are chosen from the group represented by formula (II):

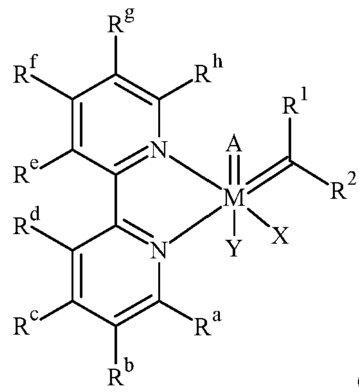

(II),

wherein:

M is Mo or W,
A is O or N-$R^3$,
$R^1$ and $R^2$ are independently selected from the group consisting of H, $C_1$-$C_{12}$-alkyl and 5-to 18-membered aryl, which $C_1$-$Ci_2$-alkyl and 5-to 18-membered aryl in turn may be substituted with one or more of $C_1$-$C_{12}$-alkyl, 5- to 18-membered aryl, $C_1$-$C_{12}$-alkyloxy, di-($C_1$-$C_4$-alkyl)amino, halogen, trifluoromethyl, cyano and nitro residues, with the proviso that only one of $R^1$ and $R^2$ can be hydrogen at the same time,
$R^3$ is selected from the group consisting of $C_1$-$C_{12}$-alkyl and 5- to 18-membered aryl, which in turn may be substituted with one or more of $C_1$-$C_{12}$-alkyl, 5- to 18-membered aryl, $C_1$-$C_{12}$-alkoxy, di-($C_1$-$C_4$-alkyl)amino, halogen, trifluoromethyl, cyano and nitro residues,
X and Y are independently selected from the group consisting of halogen, methanesulfonyloxy, trifluoromethanesulfonyloxy, benzenesulfonyloxy, toluenesulfonyloxy, pyrrolyl, indolyl, pyrazolyl, $C_1$-$C_{12}$-alkyloxy, 5- to 18-membered aryloxy, tri($C_1$-$C_{12}$-alkyl)silyloxy, tri($C_6$-$C_{18}$-aryl)silyloxy, di($C_1$-$C_{12}$-alkyl)($C_6$-$C_{18}$-aryl)silyloxy, ($C_1$-$C_{12}$-alkyl)di($C_6$-$C_{18}$-aryl)silyloxy and tri($C_1$-$C_{12}$-alkyloxy)silyloxy, which in turn may be substituted with one or more of $C_1$-$C_{12}$-alkyl, 5-to 18-membered aryl, $C_1$-$C_{12}$-alkyloxy, di-($C_1$-$C_4$-alkyl)amino, halogen, trifluoromethyl, cyano and nitro residues, or wherein groups X and Y together form the structure of formula (III-A), (III-B) or (III-C):

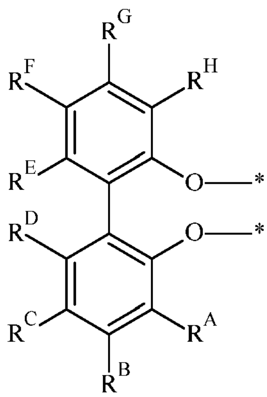

(III-A)

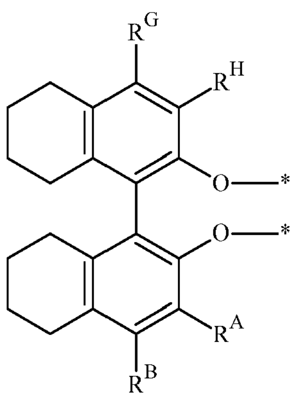

(III-B)

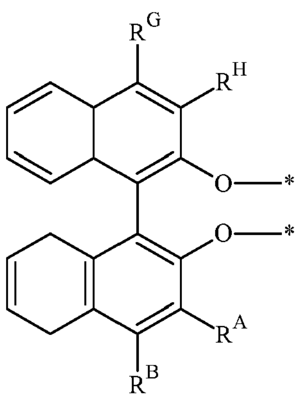

(III-C)

,

wherein $R^A$, $R^B$, $R^C$, $R^D$, $R^E$, $R^F$, $R^G$ and $R^H$ are independently selected from the group consisting of H, halogen, nitro, cyano, trifluoromethyl, $C_1$-$C_{12}$-alkoxycarbonyl, $C_1$-$C_{12}$-alkyl, 5- to 18-membered aryl, $C_1$-$C_{12}$-alkyloxy and di-($C_1$-$C_4$-alkyl)amino.

**3.** Polymerizable composition according to claim 1 or 2, wherein the one or more 18-electron Schrock alkylidene adducts are chosen from formula (II-A) and (II-B):

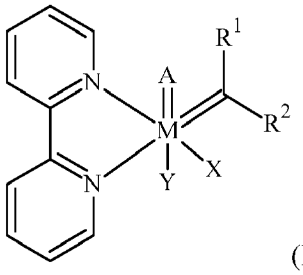

(II-A)

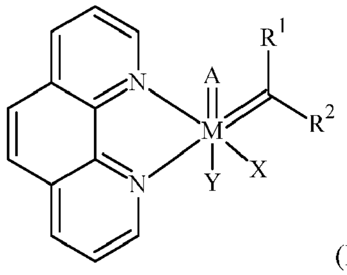

(II-B),

wherein M, A, X, Y, $R^1$ and $R^2$ are as defined in claim 2.

**4.** Polymerizable composition according to any one of claims 1 to 3, wherein the one or more 18-electron Schrock alkylidene adducts are chosen from formula (II-C) and formula (II-D):

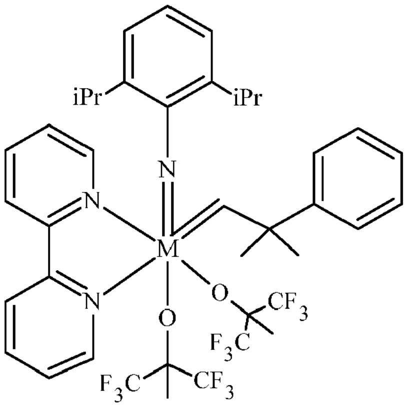

(II-C)

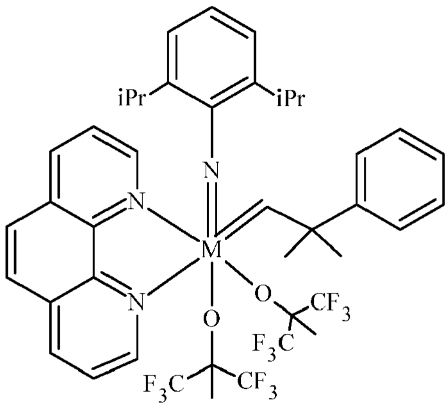

(II-D),

wherein M is Mo or W, preferably Mo, and wherein iPr represents isopropyl.

**5.** Polymerizable composition according to any one of claims 1 to 4, wherein the cyclic olefinic monomers having a ring strain of greater than 85 kJ/mol are chosen from the group consisting of dicyclopentadiene (DCPD), norbornene or derivatives thereof, norbornadiene or derivatives thereof and combinations thereof.

**6.** Polymerizable composition according to any one of claims 1 to 5, further comprising cyclic olefinic monomers chosen from the group consisting of cyclopentene, 1,4-cyclohexadiene, cycloheptene, *cis*-cyclooctene, *cis,cis*-1,5-cyclooctadiene, 1,3,5,7-cyclooctatetraene, cyclododecene, *trans,trans,cis*-1,5,9-cyclododecatriene, derivatives thereof and combinations thereof.

**7.** Polymerizable composition according to any one of claims 1 to 6, wherein the monomers constitute at least 20 wt.% of the weight of the polymerizable composition, preferably at least 50 wt.%, more preferably at least 90 wt.%.

**8.** Polymerizable composition according to any one of claims 1 to 7, wherein cyclic olefinic monomers constitute at least 80 mol% of the monomers, preferably at least 90 mol%.

**9.** Polymerizable composition according to any one of claims 1 to 8, wherein the monomers comprise dicyclopentadiene (DCPD), *cis,cis*-1,5-cyclooctadiene (COD) and optionally ethylidene norbornene (ENB) and/or tricyclopentadiene (TCPD).

**10.** Polymerizable composition according to any one of claims 1 to 9, wherein the molar ratio of the cyclic olefinic monomers to the one or more 18-electron Schrock alkylidene adducts is between 500 and 200000, preferably between 10000 and 150000, more preferably between 20000 and 80000.

**11.** Polymerizable composition according to any one of claims 1 to 10, wherein the polymerizable composition does not comprise $MgCl_2$, $MgBr_2$, $MgI_2$, $MnCl_2$, $MnBr_2$, $MnI_2$, $FeCl_3$, $AlCl_3$, $CuCl_2$, $ZnCl_2$, $ZnBr_2$, $ZnI_2$, $Zn(triflate)_2$ and $Zn(trifluoroacetate)_2$.

**12.** Ring-opening metathesis polymerization process comprising the steps of:

(a) providing a polymerizable composition according to any one of claims 1 to 11; and
(b) subjecting the polymerizable composition to ring-opening metathesis polymerization.

**13.** Ring-opening metathesis polymerization process according to claim 12, wherein no $MgCl_2$, $MgBr_2$, $MgI_2$, $MnCl_2$, $MnBr_2$, $MnI_2$, $FeCl_3$, $AlCl_3$, $CuCl_2$, $ZnCl_2$, $ZnBr_2$, $ZnI_2$, Zn(triflate)$_2$ and Zn(trifluoroacetate)$_2$ are added.

**14.** Ring-opening metathesis polymerization process according to claim 12 or 13, wherein step (a) comprises injecting the polymerizable composition into a mold, casting the polymerizable composition into a mold, and/or providing the polymerizable composition into a bath for wetting reinforcing fibers.

**15.** Polymerized article comprising between 5 and 100 ppm of the combined amounts of the metals Mo and W, based on the weight of the polymerized article, obtainable by the ring-opening metathesis polymerization process according to any one of claims 12 to 14.

Europäisches Patentamt
European Patent Office
Office européen des brevets

# EUROPEAN SEARCH REPORT

Application Number
EP 23 18 2113

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/003147 A1 (MATERIA INC [US]) 8 January 2015 (2015-01-08) * paragraph [0002] - paragraph [0274]; claims 1-9; examples * ----- | 1-15 | INV. C08G61/08 B01J31/02 B32B27/08 C08L65/00 C09D165/00 |
| X | EP 3 199 577 A1 (TELENE SAS [FR]) 2 August 2017 (2017-08-02) * paragraph [0001] - paragraph [0041]; claims 1-15; examples * ----- | 1-15 | |
| X | WO 2017/134673 A1 (STRATASYS LTD [IL]) 10 August 2017 (2017-08-10) * page 1, line 6 - page 136, line 17; claims 1-55; examples * ----- | 1-15 | |
| X | BRESLOW ET AL: "Metathesis polymerization", PROGRESS IN POLYMER SCIENCE, PERGAMON PRESS, OXFORD, GB, vol. 18, no. 6, 1 January 1993 (1993-01-01), pages 1141-1195, XP022839113, ISSN: 0079-6700, DOI: 10.1016/0079-6700(93)90012-2 [retrieved on 1993-01-01] * page 1141 - page 1195 * ----- | 1-15 | TECHNICAL FIELDS SEARCHED (IPC) C08G B01J B32B C08L C09D |
| X | US 2023/098669 A1 (LEGUIZAMON SAMUEL CARLOS [US] ET AL) 30 March 2023 (2023-03-30) * paragraph [0004] - paragraph [0037]; claims; tables 1-24 * ----- | 1-15 | |
| X | JP H07 258390 A (TEIJIN METON KK) 9 October 1995 (1995-10-09) * paragraph [0001] - paragraph [0117]; claims 1-7; examples * ----- -/-- | 1-15 | |

The present search report has been drawn up for all claims

1

| Place of search | Date of completion of the search | Examiner |
|---|---|---|
| The Hague | 25 October 2023 | Kiebooms, Rafaël |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

Application Number
EP 23 18 2113

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 055 499 A (ENDO ZENICHIRO [JP] ET AL) 8 October 1991 (1991-10-08) * column 1, line 6 - column 11, line 37; claims 1-18; examples * | 1-15 | |
| X | EP 0 374 903 A2 (HERCULES INC [US]) 27 June 1990 (1990-06-27) * page 2, line 6 - page 11, line 13; claims 1-12; examples * | 1-15 | |
| X | EP 0 303 969 A2 (GOODRICH CO B F [US]) 22 February 1989 (1989-02-22) * page 2, line 4 - page 7, line 20; claims 1-14; examples * | 1-15 | |
| X | EP 0 263 425 A1 (TEIJIN LTD [JP]) 13 April 1988 (1988-04-13) * page 2, line 4 - page 8, line 37; claims 1-16; examples * | 1-15 | |
| X | US 5 011 730 A (TENNEY LINDWOOD P [US] ET AL) 30 April 1991 (1991-04-30) * column 1, line 10 - column 8, line 59; claims 1-38; examples * | 1-15 | TECHNICAL FIELDS SEARCHED (IPC) |
| X | EP 4 190 836 A1 (RIMTEC CORP [JP]) 7 June 2023 (2023-06-07) * paragraph [0001] - paragraph [0097]; claims 1-7; examples * | 1-15 | |
| X | EP 0 421 363 A2 (HERCULES INC [US]) 10 April 1991 (1991-04-10) * page 2, line 4 - page 9, line 36; claims 1-18; examples * | 1-15 | |

The present search report has been drawn up for all claims

1

| Place of search | Date of completion of the search | Examiner |
|---|---|---|
| The Hague | 25 October 2023 | Kiebooms, Rafaël |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 23 18 2113

This annex lists the patent family members relating to the patent documents cited in the above-mentioned European search report.
The members are as contained in the European Patent Office EDP file on
The European Patent Office is in no way liable for these particulars which are merely given for the purpose of information.

25-10-2023

| Patent document cited in search report | Publication date | Patent family member(s) | Publication date |
|---|---|---|---|
| WO 2015003147 A1 | 08-01-2015 | AU 2014285077 A1 | 21-01-2016 |
| | | CA 2915871 A1 | 08-01-2015 |
| | | CN 105492489 A | 13-04-2016 |
| | | EA 201690142 A1 | 30-06-2016 |
| | | EP 3016991 A1 | 11-05-2016 |
| | | JP 6718919 B2 | 08-07-2020 |
| | | JP 2016523314 A | 08-08-2016 |
| | | JP 2018145443 A | 20-09-2018 |
| | | KR 20160027116 A | 09-03-2016 |
| | | MY 184011 A | 17-03-2021 |
| | | US 2016257779 A1 | 08-09-2016 |
| | | WO 2015003147 A1 | 08-01-2015 |
| EP 3199577 A1 | 02-08-2017 | BR 112018015758 A2 | 02-01-2019 |
| | | CN 108713036 A | 26-10-2018 |
| | | EP 3199577 A1 | 02-08-2017 |
| | | EP 3411431 A1 | 12-12-2018 |
| | | RU 2018131180 A | 03-03-2020 |
| | | US 2019039271 A1 | 07-02-2019 |
| | | WO 2017134073 A1 | 10-08-2017 |
| WO 2017134673 A1 | 10-08-2017 | EP 3411218 A1 | 12-12-2018 |
| | | US 2020346397 A1 | 05-11-2020 |
| | | WO 2017134673 A1 | 10-08-2017 |
| US 2023098669 A1 | 30-03-2023 | US 2023098669 A1 | 30-03-2023 |
| | | WO 2023055525 A1 | 06-04-2023 |
| JP H07258390 A | 09-10-1995 | JP 3212820 B2 | 25-09-2001 |
| | | JP H07258390 A | 09-10-1995 |
| US 5055499 A | 08-10-1991 | JP 2755642 B2 | 20-05-1998 |
| | | JP H02185558 A | 19-07-1990 |
| | | US 5055499 A | 08-10-1991 |
| EP 0374903 A2 | 27-06-1990 | AT E140945 T1 | 15-08-1996 |
| | | DE 68926907 T2 | 06-02-1997 |
| | | EP 0374903 A2 | 27-06-1990 |
| | | KR 900701874 A | 04-12-1990 |
| | | WO 9006965 A1 | 28-06-1990 |
| EP 0303969 A2 | 22-02-1989 | CA 1339233 C | 05-08-1997 |
| | | EP 0303969 A2 | 22-02-1989 |
| | | JP S6471195 A | 16-03-1989 |
| | | KR 890004596 A | 22-04-1989 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 23 18 2113

This annex lists the patent family members relating to the patent documents cited in the above-mentioned European search report. The members are as contained in the European Patent Office EDP file on
The European Patent Office is in no way liable for these particulars which are merely given for the purpose of information.

25-10-2023

| Patent document cited in search report | Publication date | Patent family member(s) | Publication date |
|---|---|---|---|
| EP 0263425 A1 | 13-04-1988 | CA 1298680 C | 07-04-1992 |
| | | EP 0263425 A1 | 13-04-1988 |
| | | JP H0717740 B2 | 01-03-1995 |
| | | JP S6389515 A | 20-04-1988 |
| | | KR 880005172 A | 28-06-1988 |
| | | US 5064919 A | 12-11-1991 |
| US 5011730 A | 30-04-1991 | NONE | |
| EP 4190836 A1 | 07-06-2023 | CN 115867591 A | 28-03-2023 |
| | | EP 4190836 A1 | 07-06-2023 |
| | | JP WO2022030310 A1 | 10-02-2022 |
| | | WO 2022030310 A1 | 10-02-2022 |
| EP 0421363 A2 | 10-04-1991 | CA 2026150 A1 | 04-04-1991 |
| | | EP 0421363 A2 | 10-04-1991 |
| | | JP H03179022 A | 05-08-1991 |
| | | KR 910008051 A | 30-05-1991 |
| | | US 5019620 A | 28-05-1991 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2012116695 A1
- WO 2021239891 A1
- WO 2020072776 A1
- WO 2015130802 A1
- EP 2460587 A


### Non-patent literature cited in the description


- **H. GULYÁS et al.** *Communications Chemistry*, 2021, vol. 4 (7), 1-11
- **I. NJOROGE et al.** *Langmuir*, 2017, vol. 33 (49), 13903-13912